# EUROPEAN PATENT SPECIFICATION

(11) **EP 1 341 853 B1**
(45) Date of publication and mention of the grant of the patent: **24.08.2005**
(21) Application number: 01970069.9
(22) Date of filing: 28.09.2001
(51) Int. Cl.: C09B 67/22

(54) **TRICHROMATIC DYEING PROCESS**
TRICHROMIE-FAERBEVERFAHREN
PROCEDE DE TEINTURE TRICHROMATIQUE

(30) Priority: 05.12.2000 CH 236500
(43) Date of publication of application: 10.09.2003
(73) Proprietor: Clariant Finance (BVI) Limited, Road Town, Tortola (VG)
(72) Inventor: STAKELBECK, Hans-Peter, 79589 Binzen (DE); SCHÖFBERGER, Georg, CH-4052 Basel (CH)
(74) Representative: Dünnwald, Dieter
(86) International application number: PCT/IB2001/001795
(87) International publication number: WO 2002/046318

(56) References cited:
- EP-A- 0 545 207
- EP-A- 0 593 392
- EP-A- 0 668 328
- EP-A- 0 962 501
- DATABASE WPI Section Ch, Week 200152 Derwent Publications Ltd., London, GB; Class A60, AN 2001-477871 XP002186460 & JP 2001 098183 A (SUMITOMO CHEM CO LTD), 10 April 2001 (2001-04-10)

## Description

The present invention relates to a process for the trichromatic dyeing or printing of natural or synthetic polyamide fibres or such fibres as contain polyamide with dye mixtures and also to such dye mixtures and polyamide fibres dyed or printed therewith.

Trichromatic describes the additive colour mixing of suitable yellow- or orange-, red- and blue-dyeing dyes with which any desired shade in the visible spectrum can be obtained by suitably selecting the amount ratios for the dyes.

Trichromatic dyeing is well known from the literature for various dye classes, for example from EP 83299, DE 2623178, EP 226982 and EP 808940.

Optimum trichromatic performance of any yellow, red and blue dye mixture is crucially dependent on the neutral affinity and migration characteristics. Dyes having identical or very similar characteristics with regard to neutral affinity and migration are highly compatible with regard to trichromatic performance. Combinations of dyes having good trichromatic properties are known for monosulphonated acid dyes. By contrast, no such dye mixtures are known to date for disulphonated acid dyes, for example the Nylosan® F dyes from Clariant.

It is an object of the present invention to provide a trichromatic dyeing process and associated trichromatic dye mixtures consisting of at least one blue component, at least one yellow component and at least one red component whereby trichromatic dyeing with good fastnesses is made possible even for disulphonated acid dyes.

This object is achieved by a trichromatic dyeing process which is characterized in that it comprises using a dye mixture consisting of at least one blue-dyeing compound of the formula (I) 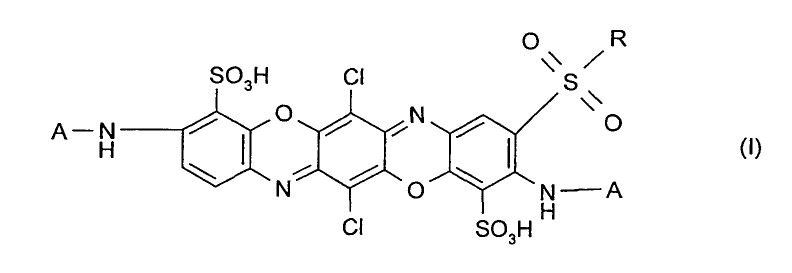 where
- A: is a hydrogen atom or a discretionary substituent and
- R: is a discretionarily substituted alkyl, cycloalkyl or aryl radical,
and of at least one yellow-dyeing compound of the formula (II) 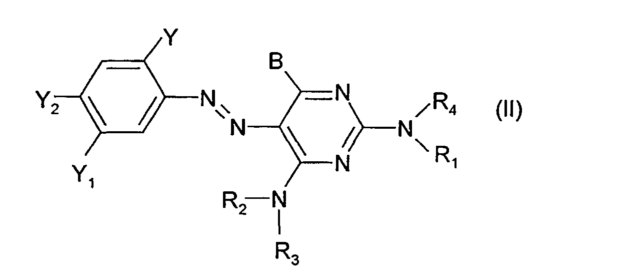 where
- B: is hydrogen; alkyl; hydroxyl-, alkoxy-, alkanoyloxy- or phenoxy-substituted alkyl, aralkyl, cycloalkyl or unsubstituted or alkyl-, halogen-, alkoxy-, nitro-, cyano-, alkoxycarbonyl-, carbamoyl- or sulphamoyl-substituted phenyl,
- R₄: is hydrogen; alkyl of 1-8 carbon atoms which may be interrupted by oxygen atoms and may be substituted by hydroxyl, acyloxy, alkoxy, cyano, cycloalkoxy, aralkoxy or aroxy; unsubstituted or hydroxyl-, chlorine-, hydroxyalkyl-, chloroalkyl- or alkyl-substituted cycloalkyl or polycycloalkyl radicals of 5 to 15 carbon atoms; aralkyl radicals of 7 to 15 carbon atoms or unsubstituted or chlorine-, hydroxyl-, alkoxy-, alkyl-, hydroxyalkyl- or hydroxyalkoxy-substituted phenyl radicals and also alkenyl, pyrrolidonylalkyl and carbonyfalkyl radicals,
- R₁: is hydrogen; alkyl of 1-8 carbon atoms or hydroxyalkyl of 2 to 9 carbon atoms, and
- R₄ and R₁: combine with the nitrogen to form the radical of pyrrolidine, of piperidine or of morpholine and independently
- R₂: has the same meanings as R₄,
- R₃: has the same meanings as R₁ and
- R₂ and R₃: together have the same meanings as R₄ and R₁ together,
- Y: is hydrogen; cyano; chlorine; bromine; methyl sulphone; ethyl sulphone; phenyl sulphone; carbalkoxy or -SO₃H,
- Y₁: is hydrogen; chlorine; bromine or -SO₃H,
- Y₂: is hydrogen; chlorine; bromine; methyl; carbalkoxy; 2-benzothiazolyl or -SO₃H,
and where B, R₁ to R₄ and Y to Y₂ together contain at least 2 sulphonic acid groups,
and of at least one red-dyeing compound of the formula (III) 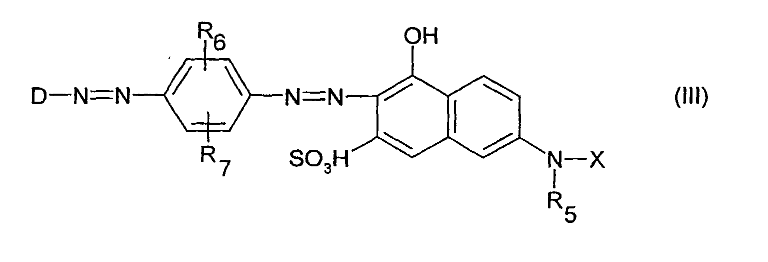 where
- D: is 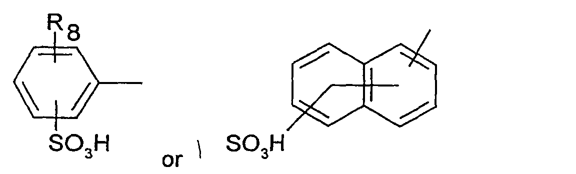
- R₅: is hydrogen; C₁₋₄alkyl or C₂₋₄-hydroxyalkyl,
- R₆: is hydrogen; C₁₋₄alkyl; C₁₋₄alkoxy; -NHCOC₁₋₄alkyl; -NHCOOC₁₋₄alkyl or -NHCONH₂,
- R₇: is hydrogen; halogen; C₁₋₄alkyl or C₁₋₄alkoxy and
- R₈: is hydrogen; C₁₋₄alkyl; C₁₋₄alkoxy or halogen;
- X: is 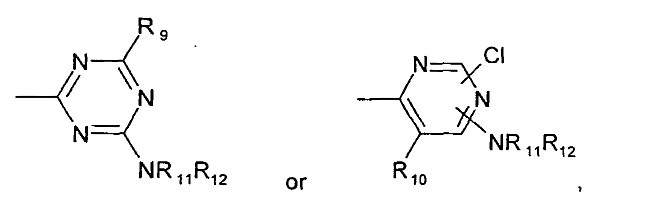
where
- R₉: is chlorine; hydroxyl or NHCN,
- R₁₀: is hydrogen; chlorine or cyano,
- R₁₁: is hydrogen; C₁₋₁₂alkyl; hydroxyl-monosubstituted or -disubstituted C₂₋₈alkyl, phenyl, phenyl(C₁₋₄alkyl) or cyclohexyl and
- R₁₂: is unsubstituted or halogen-substituted, hydroxyl-monosubstituted or -disubstituted, phenyl-substituted, carboxyl-substituted or C₁₋₁₂alkoxy-substituted C₄₋₂₀alkyl; -G-O-C₁₋₁₂alkyl, where G is C₂₋₃alkylene; phenyl or phenyl(C₁₋₃alkyl), whose phenyl ring is unsubstituted or substituted by one to three substituents selected from the group consisting of halogen, C₁₋₁₆alkyl, C₂₋₆hydroxyalkyl, C₁₋₆alkoxy, phenoxy and -NHCOCH₃; or is cyclohexyl which is unsubstituted or substituted by one to three C₁₋₄alkyl groups,
with the proviso that the total number of carbon atoms in R₁₁ and R₁₂ together is at least 8, or
-NR₁₁R₁₂ is 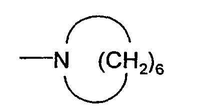 and/or of at least one red-dyeing compound of the formula (IV) 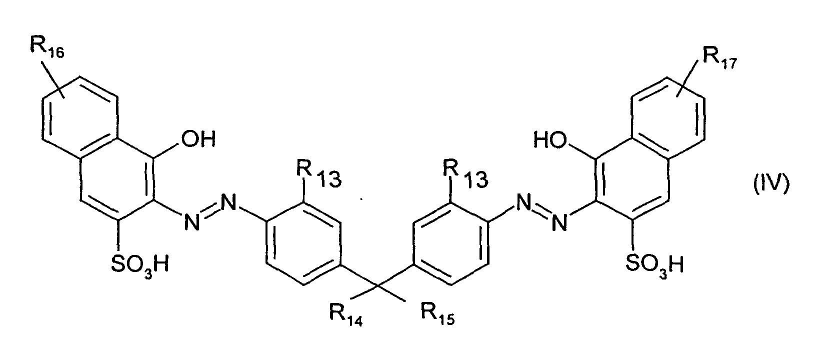 where
- each R₁₃: is independently hydrogen, C₁₋₄alkyl or halogen,
- R₁₄: is hydrogen or substituted or unsubstituted C₁₋₄alkyl,
- R₁₅: independently has the same meanings as R₁₄, or
- R₁₄ and R₁₅: combine to form a cycloaliphatic ring of 5-8 carbon atoms,
- R₁₆: is hydrogen or hydroxyl and
- R₁₇: independently has the same meanings as R₁₆,
and/or of at least one red-dyeing compound of the formula (V) 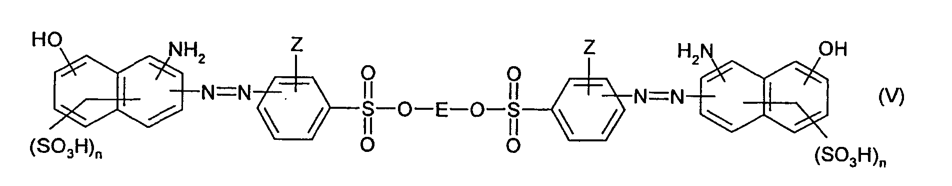 where
- E: represents an aromatic, araliphatic, hydroaromatic radical or two aromatic radicals,
- Z: represents hydrogen or a discretionary substituent except sulphonic acid and carboxylic acid groups,
- n: represents 1 or 2,
and at least one anionic and/or nonionic dyeing auxiliary.

Dyeing processes making use of reactive dye mixtures with similar structures are disclosed in EP,A,668,328 and EP,A,545,207.

A preferred trichromatic dyeing process comprises, as well as at least one anionic and/or nonionic dyeing auxiliary, using dye mixtures consisting of at least one blue-dyeing compound as per the formula (I) where A is a hydrogen atom or a discretionarily substituted alkyl or aryl radical, and at least one yellow-dyeing compound as per the formula (II) where
- B: is hydrogen; alkyl; hydroxyl-, alkoxy-, alkanoyloxy or phenoxy-substituted alkyl,
- R₄: is hydrogen or alkyl of 1-8 carbon atoms which may be interrupted by oxygen atoms and may be substituted by hydroxyl, acyloxy, alkoxy, cyano, cycloalkoxy, aralkoxy or aroxy,
- R₂: is hydrogen; alkyl of 1-8 carbon atoms which may be interrupted by oxygen atoms and may be aryl radicals of 7 to 15 carbon atoms and
- Y: is hydrogen; chlorine; bromine or -SO₃H,
- Y₁: is hydrogen; chlorine; bromine; methyl or -SO₃H,
- Y₂: is hydrogen; chlorine; bromine; methyl or -SO₃H,
and at least one red-dyeing compound as per the formula (III)
where
- D: is 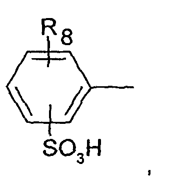
- R₅: is hydrogen or methyl,
- R₆: is hydrogen; methyl; C₁₋₄alkoxy; -NHCOCH₃ or -NHCONH₂,
- R₇: is hydrogen; methyl and
- R₈: is hydrogen; methyl; methoxy and
- X: is 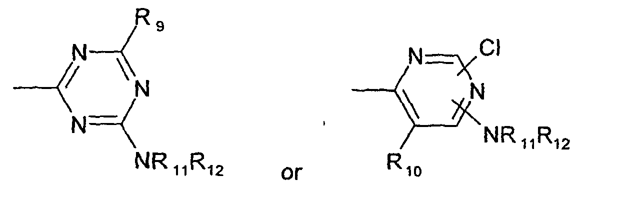
where
- R₉: is chlorine; hydroxyl or NHCN,
- R₁₀: is hydrogen; chlorine or cyano,
- R₁₁: is hydrogen; C₁₋₄alkyl; hydroxyl-monosubstituted or -disubstituted C₂₋₄alkyl or phenyl and
- R₁₂: is unsubstituted or phenyl-monosubstituted C₄₋₁₄alkyl; -G1-O-C₆₋₁₂alkyl, where G1 is linear C₂₋₃alkylene; C₆₋₁₆alkyl- or phenoxy-monosubstituted phenyl; phenyl-(C₁₋₂alkyl) whose phenyl ring is unsubstituted or monosubstituted by C₆₋₁₄alkyl; or cyclohexyl substituted by one to three methyl groups,
and/or at least one red-dyeing compound of the formula (IVa) 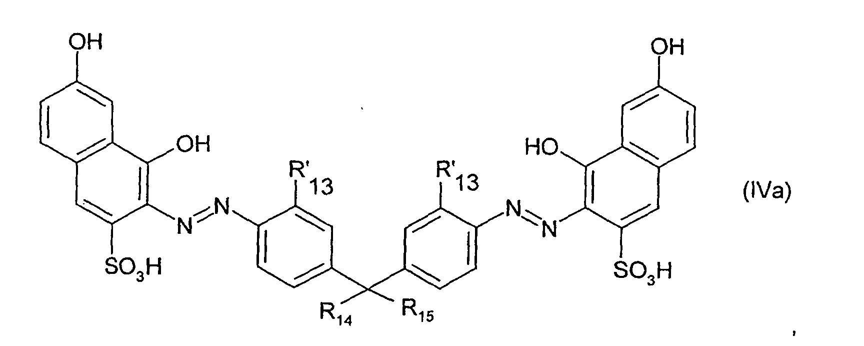 where
- each R'₁₃: is independently hydrogen or a C₁₋₄alkyl group,
- R₁₄ and R₁₅: have the meanings defined above,
and/or at least one red-dyeing compound of the formula (Va) 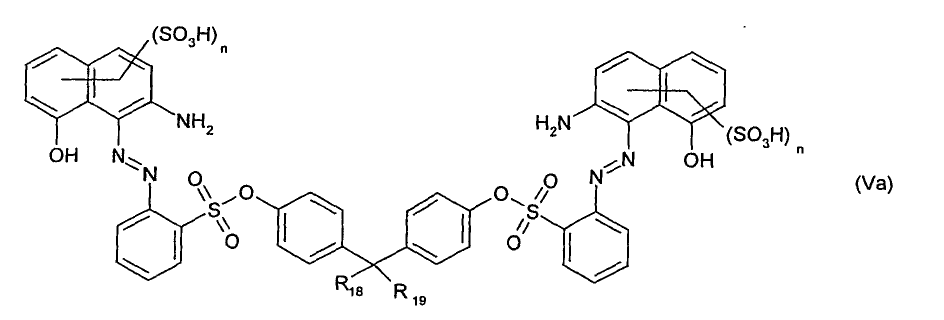 where
- R₁₈: is hydrogen or substituted or unsubstituted C₁₋₄alkyl,
- R₁₉: independently has the same meanings as R₁₈,
- n: is 1 or 2.

A further likewise preferred trichromatic dyeing process comprises, as well as at least one anionic and/or nonionic dyeing auxiliary, using dye mixtures whose red component is a mixture of at least one red component of the formula (III) and at least one red component of the formula (IV).

A further likewise preferred trichromatic dyeing process comprises, as well as at least one anionic and/or nonionic dyeing auxiliary, using dye mixtures whose red component is a mixture of at least one red component of the formula (III) and at least one red component of the formula (V).

A further likewise preferred trichromatic dyeing process comprises, as well as at least one anionic and/or nonionic dyeing auxiliary, using dye mixtures whose red component is a mixture of at least one red component of the formula (IV) and at least one red component of the formula (V).

A more preferred trichromatic dyeing process comprises, as well as at least one anionic and/or nonionic dyeing auxiliary, using dye mixtures containing at least one blue-dyeing compound as per the formula (I), where A is a hydrogen atom and R is a discretionarily substituted aryl radical and at least one yellow-dyeing compound as per the formula (II) where
- B: is hydrogen or methyl,
- R₄: is hydrogen or alkyl of 1-4 carbon atoms,
- R₁: is hydrogen or alkyl of 1-4 carbon atoms,
- R₂: is hydrogen; alkyl of 1-4 carbon atoms or aralkyl radicals of 7 to 15 carbon atoms,
- R₃: is hydrogen or methyl
- Y: is hydrogen or chlorine,
- Y₁: is hydrogen or chlorine,
- Y₂: is hydrogen or -SO₃H,
and at least one red-dyeing compound as per the formula (III)
where
- D: is 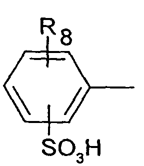
- R₅: is hydrogen or methyl,
- R₆: is hydrogen or methyl,
- R₈: is hydrogen or methyl and
- X: is 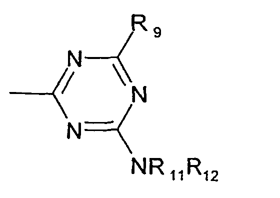
where
- R₉: is chlorine or hydroxyl,
- R₁₁: is hydrogen or methyl and
- R₁₂: is unsubstituted or phenyl-monosubstituted C₄₋₁₄alkyl,
and at least one red-dyeing compound of the formula (IVb) 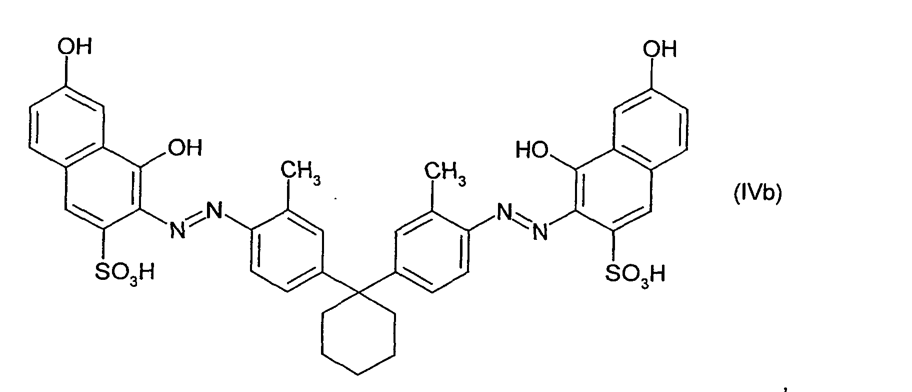 and at least one red-dyeing compound of the formula (Vb) 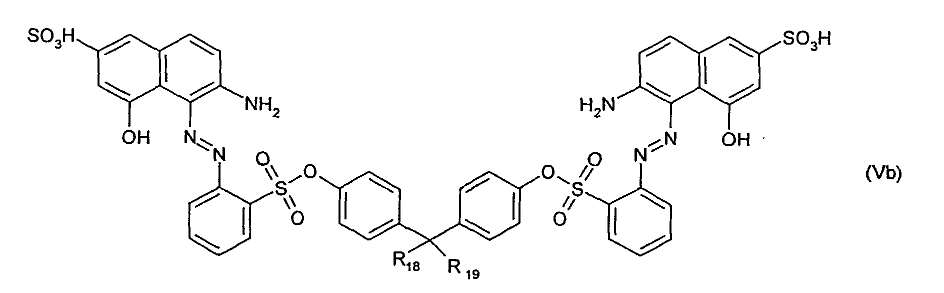 where
- R₁₈: is hydrogen or methyl,
- R₁₉: independently has the same meanings as R₁₈.

It is to be noted that all compounds may also be present in salt form. Useful salts include in particular alkali metal, alkaline earth metal or ammonium salts or the salts of an organic amine.

It is likewise to be noted that the alkyl groups can be linear or branched.

The individual dyes and their syntheses are described in the literature.

Compounds of the formula (I) are prepared according to WO 99/51681, compounds of the formula (II) according to DE 2302582, compounds of the formula (III) according to DE 4209261, compounds of the formulae (IV) and (Va) according to DE 556480 and compounds of the formula (V) according to GB 810246.

This invention further provides dye mixtures for the trichromatic dyeing or printing of natural or synthetic polyamide fibre material or such polyamide-containing material which are used in the above processes according to the invention.

The inventive process for trichromatic dyeing or printing can be applied to all customary and known dyeing and printing processes, for example the continuous process, the exhaust process, the foam dyeing process and the ink-jet process.

The composition of the individual dye components in the trichromatic dye mixture used in the process according to the invention depends on the desired hue. For instance, a brown hue preferably utilizes 55-65% by weight of the yellow component according to the invention, 20-30% by weight of the red component according to the invention and 10-20% by weight of the blue component according to the invention.

The red component, as described above, can consist of a single component or of a mixture of different red individual components which conform to the formulae (III), (IV) and (V). Preference is given to double and triple combinations. It is to be noted that the components of the individual red components of the formulae (III)-(V) can themselves be mixtures.

When a red individual component consisting of only one red component of the formula (III) is used, its fraction should not exceed 50% by weight of the trichromatic colour mixture.

When a red triple mixture consisting of one each of at least one red compound of the formula (III) and at least one red compound of the formula (IV) and at least one red compound of the formula (V), the fraction of the compounds of the formula (III) should not exceed 40% by weight based on the triple red mixture.

The total amount of dyes in the process according to the invention is between 0.01 and 15% by weight, preferably between 1 and 10% by weight.

The dye mixtures according to the invention, as well as the dyes and the water, further contain anionic or nonionic dyeing or printing auxiliaries.

Such auxiliaries are in particular wetting agents, antifoams, levelling agents, thickeners and plasticizers.

The present invention further provides substrates consisting of natural or synthetic polyamide or polyamidic substrates dyed or printed by a dye mixture according to the invention.

The process according to the invention provides dyeings and prints having a homogeneous hue build-up throughout the entire hue spectrum with on-tone exhaustion, with a high bath exhaustion even in the case of fibres with low saturation and with a high dye build-up on fine fibres, particularly on microfibres.

The resulting dyeings or prints are notable for very high wet fastnesses, specifically the fastnesses in washing, perspiration and water. These good wet and fabrication fastnesses, which are in no way inferior to the fastness level of dyeings and prints with metal complexes, are obtained without aftertreatment. With an additional aftertreatment, these fastnesses are even exceeded.

These excellent results are provided by metal-free elements which meet the current and future ecological requirements of national institues and regulations.

The tables which follow show some examples of the individual components of the dye mixtures which are used together with the anionic or nonionic dyeing or printing auxiliary.

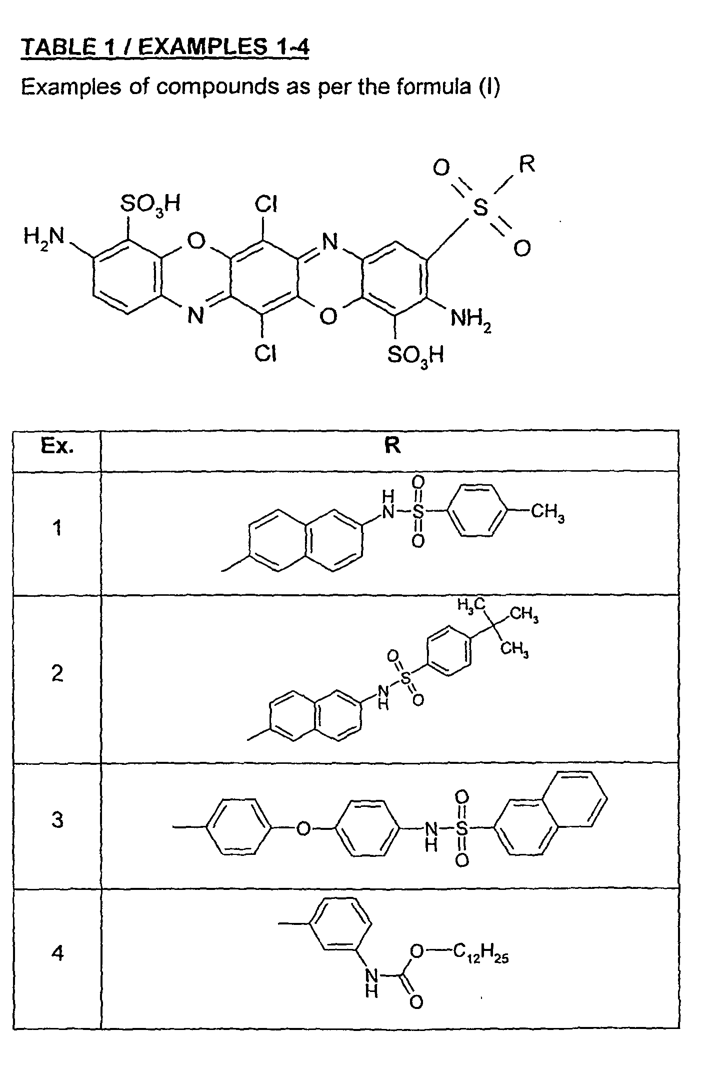

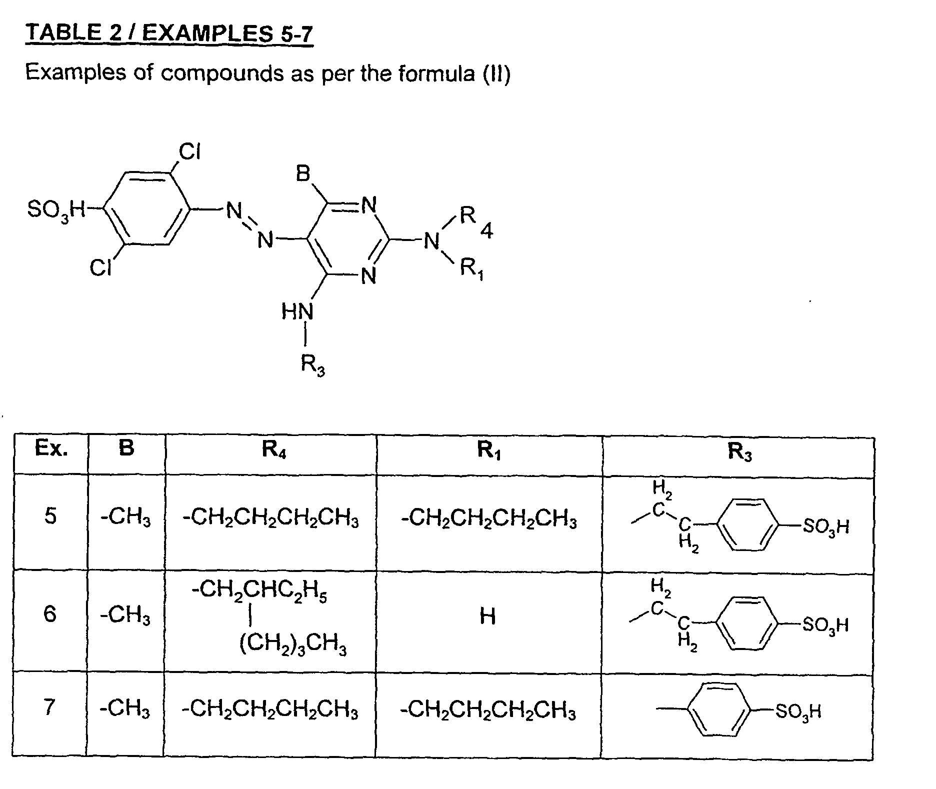

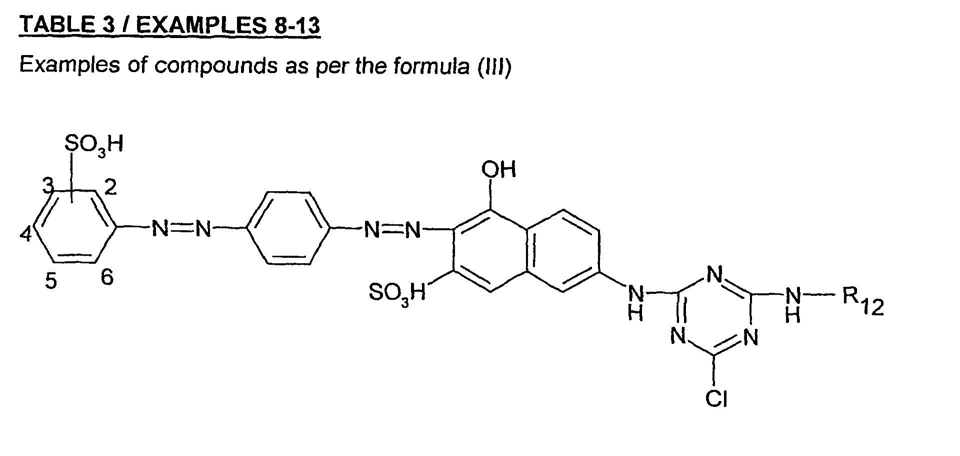

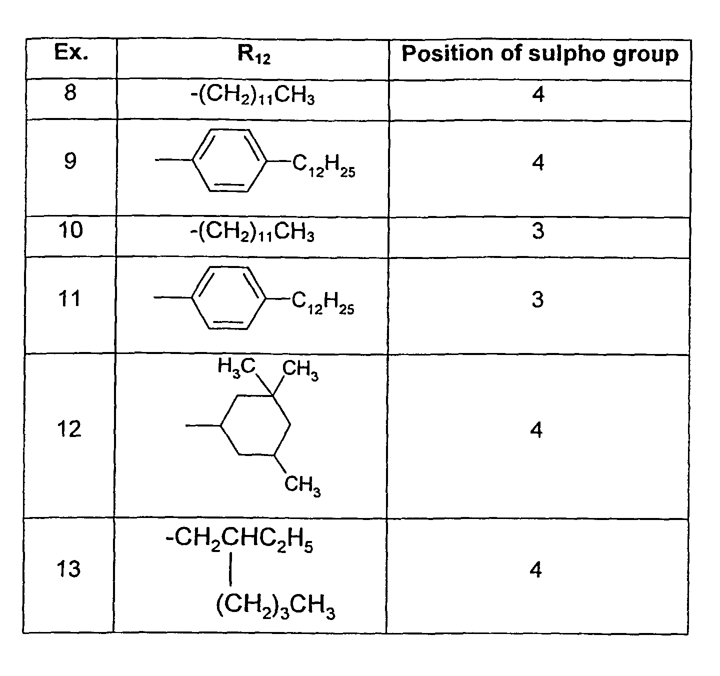

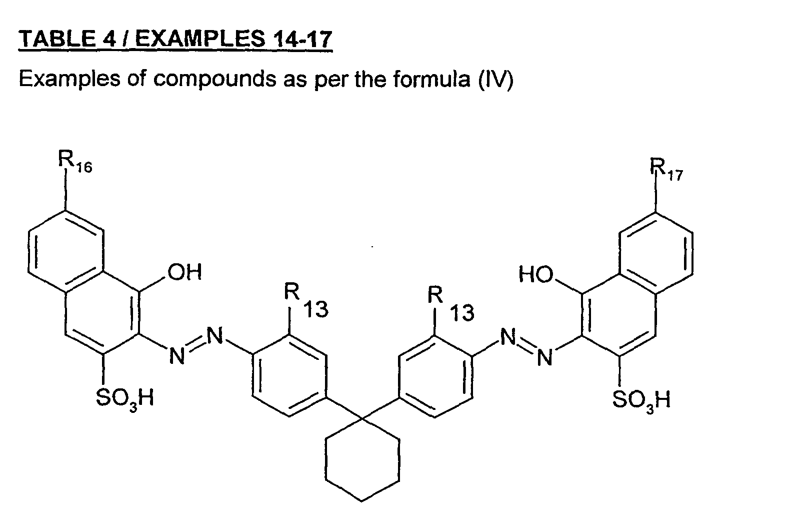

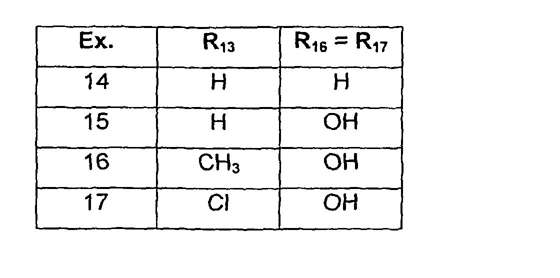

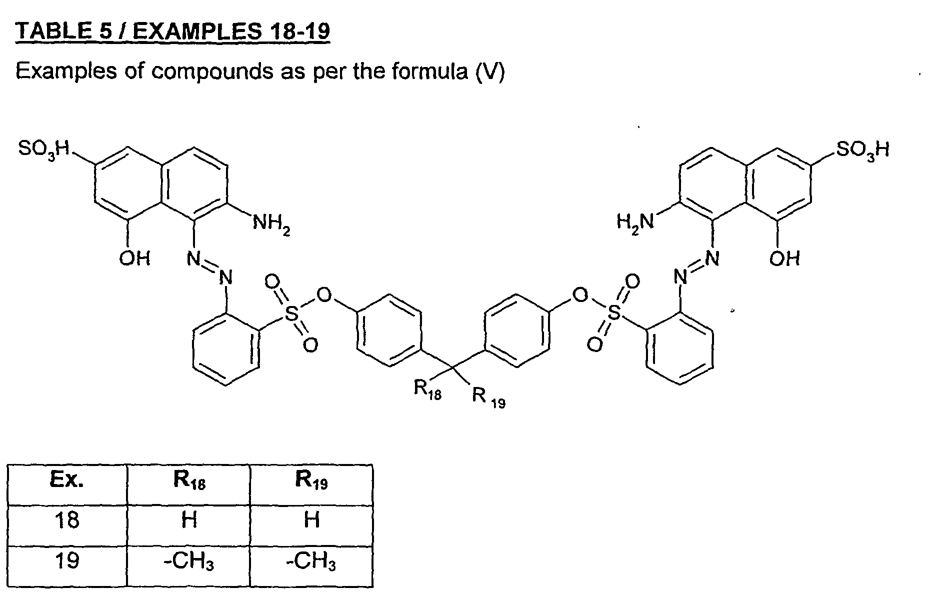

The use examples hereinbelow serve to illustrate the present invention. Parts are by weight and temperatures are in degrees Celsius, unless otherwise indicated.

### USE EXAMPLE 1

A 20 g polyamide fabric is dyed in a liquor ratio of 10:1 with the following additions:

| | |
|---|---|
| 0.5% | of a yellow dye as per Example 5, |
| 0.1% | of a red dye as per Example 13, |
| 0.1 % | of a red dye as per Example 16, |
| 0.05% | of a red dye as per Example 7, |
| 0.15% | of a blue dye as per Example 2, |
| 1.0% | of an anionic oil sulphonate and |
| 1.0 g/l | of sodium acetate |

The pH is adjusted to 4.5 with acetic acid. The liquor is heated to 70°C at 2°C/min and subsequently dyed to 98°C with 0.8°C/min. This is followed by cooling after 30 min and rinsing on attainment of 70°C. Drying without aftertreatment with a fixative provides a level brown dyeing possessing high household wash, perspiration and water fastness.

### USE EXAMPLE 2

A 20 g wool fabric is dyed in a liquor ratio of 20:1 with the following additions:

| | |
|---|---|
| 0.32% | of a yellow dye as per Example 5 |
| 0.06% | of a red dye as per Example 13 |
| 0.06% | of a red dye as per Example 16 |
| 0.06% | of a red dye as per Example 7 |
| 0.5% | of a blue dye as per Example 2 |
| 1.0% | of an anionic oil sulphonate |
| 1.0% | of an anionic fatty amine polyglycol ether |
| 1.0 g/l | of sodium acetate |

The pH is adjusted to 4.5 with acetic acid. The dyeing operation corresponds to that of Example 1. It provides a grey wool fabric having good perspiration and water fastnesses.

### USE EXAMPLE 3

A 20 g 90/10 PA/elastomer blend is dyed and finished similarly to Use Example 1. The dyeing possesses very good wash and perspiration fastnesses.

### USE EXAMPLE 4

A PA carpet is padded to a 100% pick-up with the following liquor:

| | |
|---|---|
| 2.5 g/l | of a yellow dye as per Example 5 |
| 0.36 g/l | of a red dye as per Example 13 |
| 0.36 g/l | of a red dye as per Example 16 |
| 0.18 g/l | of a red dye as per Example 7 |
| 1.7 g/l | of a blue dye as per Example 2 |
| 2.0 g/l | of a polyglycol ether sulphonate |
| 4.0 g/l | of a commercially available thickener based on bean flour ether |

The pH is adjusted to 6 with acetic acid. The carpet is then printed with a print paste containing the following components:

| | |
|---|---|
| 20.0 g/kg | of a commercially available cationic fatty acid alkyl amine |
| 20.0 g/kg | of a commercially available thickener based on bean flour ether whose pH has been adjusted to 8 with sodium carbonate. |

The coloured carpet is fixed in saturated steam for 5 min, rinsed and dried. The white/olive-green carpet obtained has very good wet fastnesses.

### USE EXAMPLE 5

Similar to Example 4 except for addition of 3 g/kg of Acid Yellow 49 in the print paste. The carpet obtained is olive green with a bright yellow print.

### USE EXAMPLE 6

A PA fabric is printed with the following printing batches:

| | |
|---|---|
| 0.2 g/kg | of a yellow dye as per Example 5 |
| 1.7 g/kg | of a blue dye as per Example 2 |
| 0.6 g/kg | of a red dye as per Example 13 |
| 0.6 g/kg | of a red dye as per Example 16 |
| 0.3 g/kg | of a red dye as per Example 7 |
| 10.0 g/kg | of glycol ether |
| 20.0 g/kg | of urea |
| 399.3 g/kg | of boiling water |
| 500.0 g/kg | of bean flour ether thickener |
| 60.0 g/kg | of ammonium sulphate |
| 5.0 g/kg | of defoamer |
| 1000 g | total |

Printing is followed by 30 min of fixing with saturated steam at 102°C and then by rinsing and drying. The print obtained is violet and possesses high wet fastness.

## Claims

1. Trichromatic dyeing process for dyeing or printing natural or synthetic polyamide fibres or such fibres as contain polyamide, **characterized in that** it comprises using a dye mixture consisting of at least one blue-dyeing compound of the formula (I) 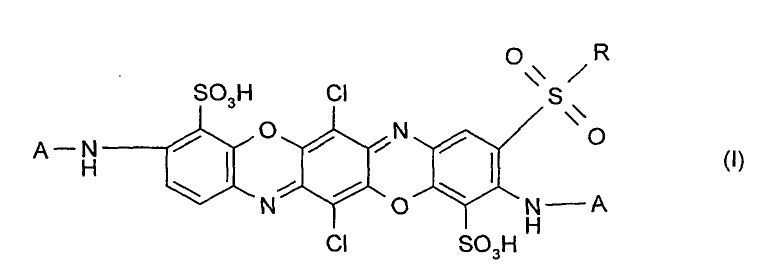 where
A is a hydrogen atom or a discretionary substituent and
R is a discretionarily substituted alkyl, cycloalkyl or aryl radical,
and of at least one yellow-dyeing compound of the formula (II) 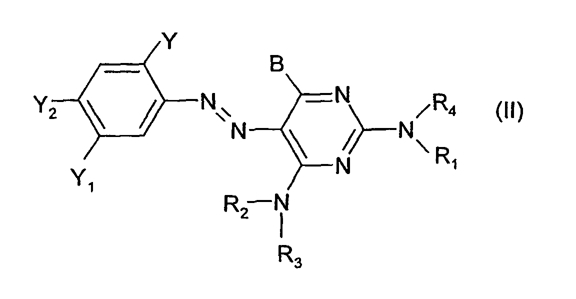 where
B is hydrogen; alkyl; hydroxyl-, alkoxy-, alkanoyloxy- or phenoxy-substituted alkyl, aralkyl, cycloalkyl or unsubstituted or alkyl-, halogen-, alkoxy-, nitro-, cyano-, alkoxycarbonyl-, carbamoyl- or sulphamoyl-substituted phenyl,
R₄ is hydrogen; alkyl of 1-8 carbon atoms which may be interrupted by oxygen atoms and may be substituted by hydroxyl, acyloxy, alkoxy, cyano, cycloalkoxy, aralkoxy or aroxy; unsubstituted or hydroxyl-, chlorine-, hydroxyalkyl-, chloroalkyl- or alkyl-substituted cycloalkyl or polycycloalkyl radicals of 5 to 15 carbon atoms, aralkyl radicals of 7 to 15 carbon atoms or unsubstituted or chlorine-, hydroxyl-, alkoxy-, alkyl-, hydroxyalkyl- or hydroxyalkoxy-substituted phenyl radicals and also alkenyl, pyrrolidonylalkyl and carbonylalkyl radicals,
R₁ is hydrogen; alkyl of 1-8 carbon atoms or hydroxyalkyl of 2 to 9 carbon atoms, and
R₄ and R₁ combine with the nitrogen to form the radical of pyrrolidine, of piperidine or of morpholine and independently
R₂ has the same meanings as R₄,
R₃ has the same meanings as R₁ and
R₂ and R₃ together have the same meanings as R₄ and R₁ together,
Y is hydrogen; cyano; chlorine; bromine; methyl sulphone; ethyl sulphone; phenyl sulphone; carbalkoxy or -SO₃H,
Y₁ is hydrogen; chlorine; bromine or -SO₃H
Y₂ is hydrogen; chlorine; bromine; methyl; carbalkoxy; 2-benzothiazolyl or -SO₃H,
and where B, R₁ to R₄ and Y to Y₂ contain sulphonic acid groups,
and of at least one red-dyeing compound of the formula (III) 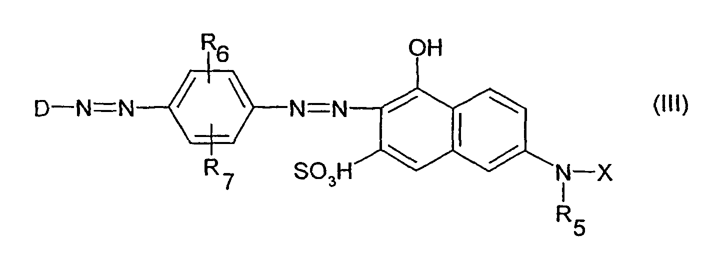 where
D is 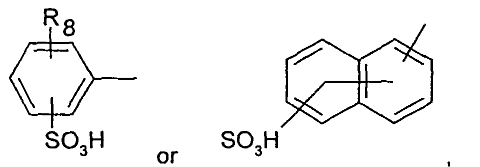
R₅ is hydrogen; C₁₋₄alkyl or C₂₋₄-hydroxyalkyl,
R₆ is hydrogen; C₁₋₄alkyl; C₁₋₄alkoxy; -NHCOC₁₋₄alkyl; -NHCOOC₁₋₄alkyl or -NHCONH₂,
R₇ is hydrogen; halogen; C₁₋₄alkyl or C₁₋₄alkoxy and
R₈ is hydrogen; C₁₋₄alkyl; C₁₋₄alkoxy or halogen;
X is 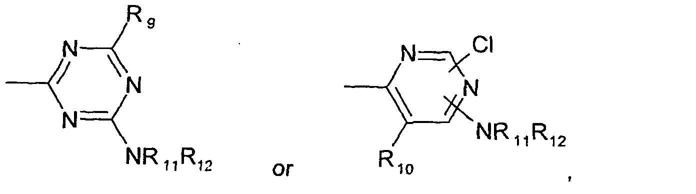 where
R₉ is chlorine; hydroxyl or NHCN,
R₁₀ is hydrogen; chlorine or cyano,
R₁₁ is hydrogen; C₁₋₁₂alkyl; hydroxyl-monosubstituted or -disubstituted C₂₋₈alkyl, phenyl, phenyl(C₁₋₄alkyl) or cyclohexyl and
R₁₂ is unsubstituted or halogen-substituted, hydroxyl-monosubstituted or -disubstituted, phenyl-substituted, carboxyl-substituted or C₁₋₁₂alkoxy-substituted C₄₋₂₀alkyl; -G-O-C₁₋₁₂alkyl, where G is C₂₋₃alkylene; phenyl or phenyl(C₁₋₃alkyl), whose phenyl ring is unsubstituted or substituted by one to three substituents selected from the group consisting of halogen, C₁₋₁₆alkyl, C₂₋₆hydroxyalkyl, C₁₋₆alkoxy, phenoxy and -NHCOCH₃; or is cyclohexyl which is unsubstituted or substituted by one to three C₁₋₄alkyl groups,
with the proviso that the total number of carbon atoms in R₁₁ and R₁₂ together is at least 8, or
-NR₁₁R₁₂ is 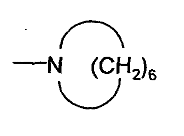 and/or of at least one red-dyeing compound of the formula (IV) 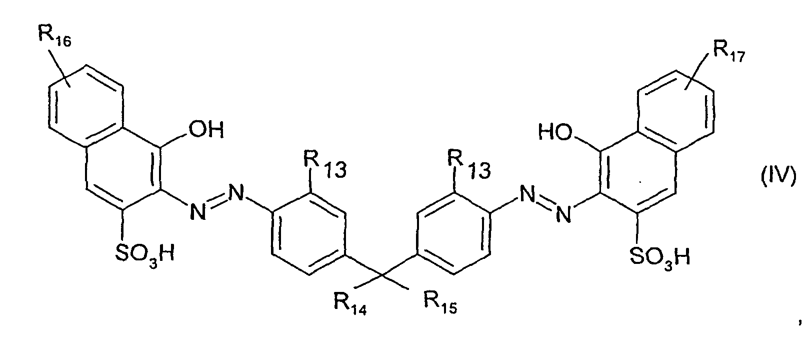 where
each R₁₃ is independently hydrogen, C₁₋₄alkyl, halogen,
R₁₄ is hydrogen or substituted or unsubstituted C₁₋₄alkyl,
R₁₅ independently has the same meanings as R₁₄, or
R₁₄ and R₁₅ combine to form a cycloaliphatic ring of 5-8 carbon atoms,
R₁₆ is hydrogen or hydroxyl and
R₁₇ independently has the same meanings as R₁₆,
and/or at least one red-dyeing compound of the formula (V) 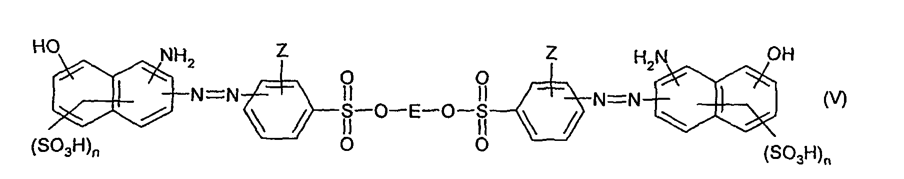 where
E represents an aromatic, araliphatic, hydroaromatic radical or two aromatic radicals,
Z represents hydrogen or a discretionary substituent except sulphonic acid and carboxylic acid groups,
n represents 1 or 2,
and at least one anionic and/or nonionic dyeing auxiliary.

2. Trichromatic dyeing process according to Claim 1, **characterized in that** it comprises using a dye mixture consisting of at least one blue-dyeing compound as per the formula (I) where A is a hydrogen atom or a discretionarily substituted alkyl or aryl radical, and of at least one yellow-dyeing compound as per the formula (II) where
B is hydrogen; alkyl; hydroxyl-, alkoxy-, alkanoyloxy or phenoxy-substituted alkyl,
R₄ is hydrogen or alkyl of 1-8 carbon atoms which may be interrupted by oxygen atoms and may be substituted by hydroxyl, acyloxy, alkoxy, cyano, cycloalkoxy, aralkoxy or aroxy,
R₂ is hydrogen; alkyl of 1-8 carbon atoms which may be interrupted by oxygen atoms and may be aryl radicals of 7 to 15 carbon atoms and
Y is hydrogen; chlorine; bromine or -SO₃H,
Y₂ is hydrogen; chlorine; bromine; methyl or -SO₃H,
and of at least one red-dyeing compound as per the formula (III)
where
D is 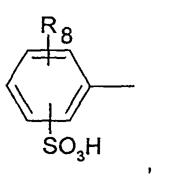
R₅ is hydrogen or methyl,
R₆ is hydrogen; methyl; C₁₋₄alkoxy; -NHCOCH₃ or -NHCONH₂,
R₇ is hydrogen; methyl and
R₈ is hydrogen; methyl; methoxy and
X is 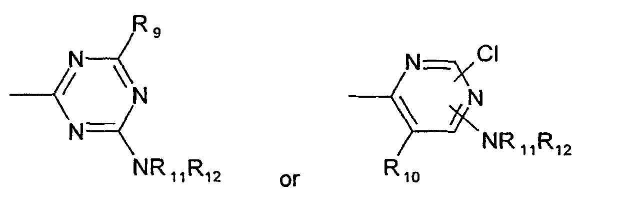
where
R₉ is chlorine; hydroxyl or NHCN,
R₁₀ is hydrogen; chlorine or cyano,
R₁₁ is hydrogen; C₁₋₄alkyl; hydroxyl-monosubstituted or -disubstituted C₂₋₄alkyl; or phenyl and
R₁₂ is unsubstituted or phenyl-monosubstituted C₄₋₁₄alkyl; -G1-O-C₆₋₁₂alkyl, where G1 is linear C₂₋₃alkylene; C₆₋₁₆alkyl- or phenoxy-monosubstituted phenyl; phenyl(C₁-₂alkyl) whose phenyl ring is unsubstituted or monosubstituted by C₆₋₁₄alkyl; or cyclohexyl substituted by one to three methyl groups,
and/or of a red-dyeing compound of the formula (IVb) 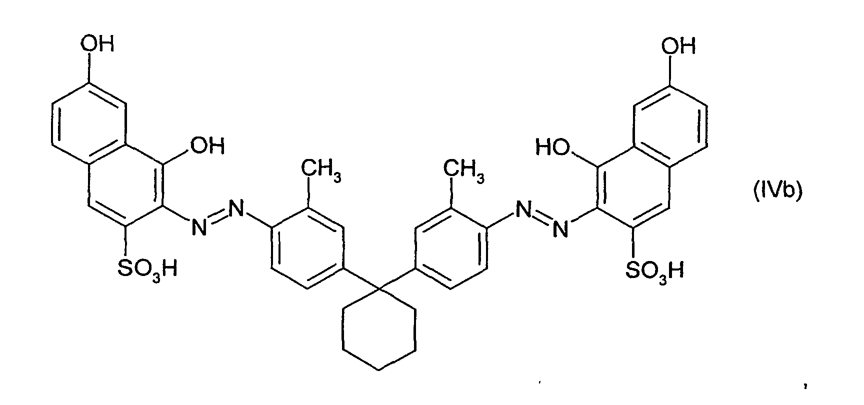 and/or of at least one red-dyeing compound of the formula (Va) 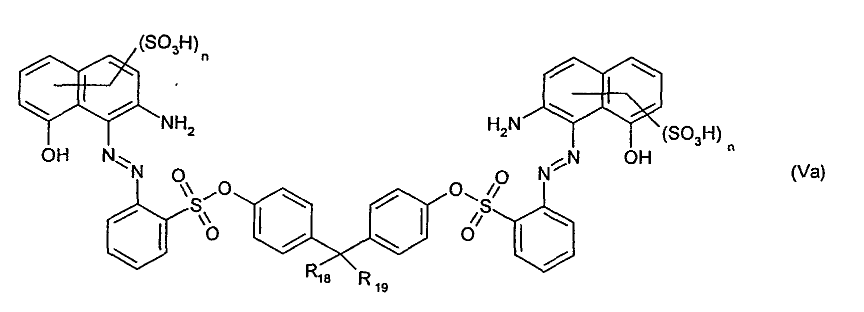 where
R₁₈ is hydrogen or substituted or unsubstituted C₁₋₄alkyl,
R₁₉ independently has the same meanings as R₁₈,
n is 1 or 2,
and at least one anionic and/or nonionic dyeing auxiliary.

3. Trichromatic dyeing process according to Claim 1 or 2, **characterized in that** it comprises using a dyeing mixture consisting of at least one blue-dyeing compound as per the formula (I), where A is a hydrogen atom and R is a discretionarily substituted aryl radical and of at least one yellow-dyeing compound as per the formula (II) where
B is hydrogen or methyl,
R₄ is hydrogen or alkyl of 1-4 carbon atoms,
R₁ is hydrogen or alkyl of 1-4 carbon atoms,
R₂ is hydrogen; alkyl of 1-4 carbon atoms or aralkyl radicals of 7 to 15 carbon atoms,
R₃ is hydrogen or methyl
Y is hydrogen or chlorine,
Y₁ is hydrogen or chlorine,
Y₂ is hydrogen or -SO₃H,
and of at least one red-dyeing compound as per the formula (III)
where
D is 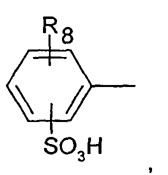
R₅ is hydrogen or methyl,
R₆ is hydrogen or methyl,
R₈ is hydrogen or methyl and
X is 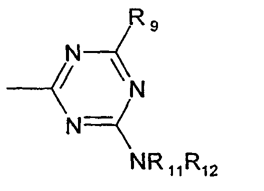
where
R₉ is chlorine or hydroxyl,
R₁₁ is hydrogen or methyl and
R₁₂ is unsubstituted or phenyl-monosubstituted C₄₋₁₄alkyl,
and of a red-dyeing compound of the formula (IVb) 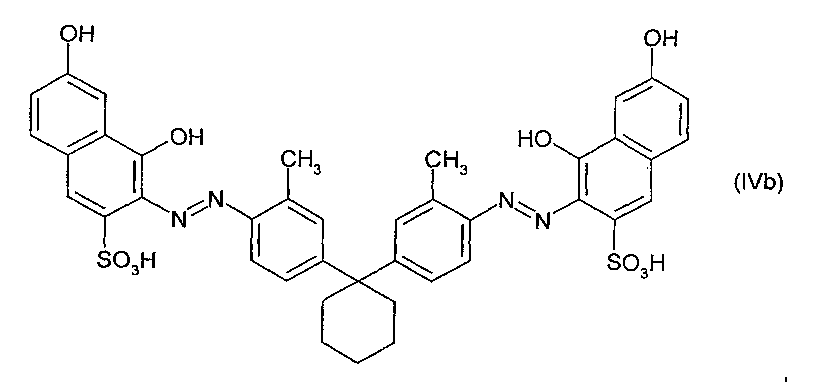 and of at least one red-dyeing compound of the formula (Vb) 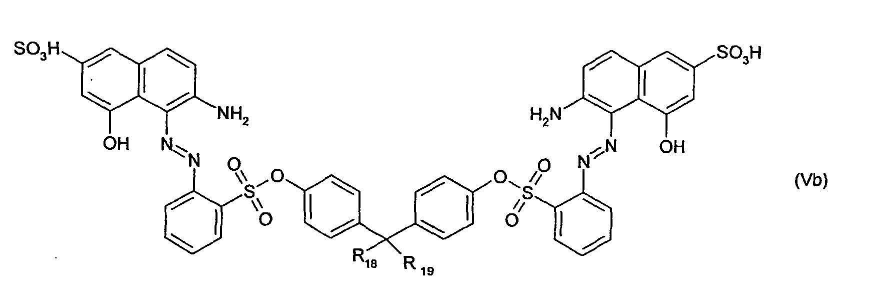 where
R₁₈ is hydrogen or methyl,
R₁₉ independently has the same meanings as R₁₈
and at least one anionic and/or nonionic dyeing auxiliary.

4. Trichromatic dyeing process according to Claim 1 or 2, **characterized in that** it comprises using a dye mixture consisting of at least one blue component according to Claim 1 or 2, and of at least one yellow component from Claim 1 or 2 and of a red component which constitutes a mixture of at least one compound of the formula (III) and at least one compound of the formula (IV), and at least one anionic and/or nonionic dyeing auxiliary.

5. Trichromatic dyeing process according to Claim 1 or 2, **characterized in that** it comprises using a dye mixture consisting of at least one blue component according to Claim 1 or 2, and of at least one yellow component from Claim 1 or 2 and of a red component which constitutes a mixture of at least one compound of the formula (III) and at least one compound of the formula (V), and at least one anionic and/or nonionic dyeing auxiliary.

6. Trichromatic dyeing process according to Claim 1 or 2, **characterized in that** it comprises using a dye mixture consisting of at least one blue component according to Claim 1 or 2, and of at least one yellow component from Claim 1 or 2 and of a red component which constitutes a mixture of at least one compound of the formula (IV) and at least one compound of the formula (V), and at least one anionic and/or nonionic dyeing auxiliary.

7. Dye mixtures used in the processes of Claims 1-6.

8. Substrates consisting of natural or synthetic polyamide or polyamidic substrates dyed or printed by a trichromatic dyeing process as claimed in any of Claims 1-6.

## Patentansprüche

1. Trichromiefärbeverfahren zum Färben oder Bedrucken von natürlichen oder synthetischen Polymidfasern oder solchen Fasern, die Polyamid enthalten, **dadurch gekennzeichnet, dass** eine Farbstoffmischung bestehend aus mindestens einer blaufärbenden Verbindung der Formel (I) 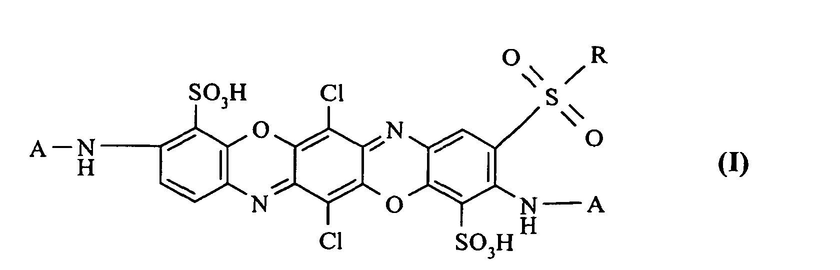 worin
A ein Wasserstoffatom oder einen beliebigen Substituenten und
R einen beliebig substituierten Alkyl-, Cycloalkyl- oder Arylrest darstellt,
und aus mindestens einer gelbfärbenden Verbindung der Formel (II) 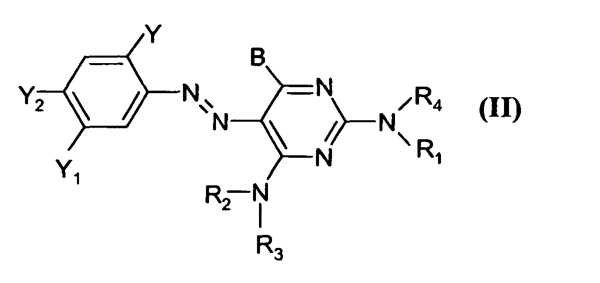 worin
B Wasserstoff; Alkyl; durch Hydroxy, Alkoxy, Alkanoyloxy oder Phenoxy substituiertes Alkyl, Aralkyl, Cycloalkyl oder gegebenenfalls durch Alkyl, Halogen, Alkoxy, Nitro, Cyan, Alkoxycarbonyl, Carbonamid oder Sulfonamid substituiertes Phenyl,
R₄ Wasserstoff; Alkyl mit 1-8 C-Atomen, das durch Sauerstoffatome unterbrochen und durch Hydroxy, Acyloxy, Alkoxy, Cyan, Cycloalkoxy, Aralkoxy oder Aroxy substituiert sein kann; gegebenenfalls durch Hydroxy, Chlor, Hydroxyalkyl, Chloralkyl oder Alkyl substituierte Cycloalkyl- oder Polycycloalkylreste mit 5 bis 15 C-Atomen, Aralkylreste mit 7 bis 15 C-Atomen oder gegebenenfalls durch Chlor, Hydroxy, Alkoxy, Alkyl, Hydroxyalkyl oder Hydroxyalkoxy substituierte Phenylreste sowie Alkenyl-, Pyrrolidonylalkyl- und Carbonylalkylreste,
R₁ Wasserstoff; Alkyl mit 1-8 C-Atomen oder Hydroxyalkyl mit 2 bis 9 C-Atomen bedeuten und
R₄ und R₁ zusammen mit dem Stickstoff den Rest des Pyrrolidins, Piperidins oder Morpholins bedeuten und unabhängig voneinander
R₂ dieselbe Bedeutung wie R₄,
R₃ dieselbe Bedeutung wie R₁ haben und
R₂ und R₃ zusammen dieselbe Bedeutung wie R₄ und R₁ zusammen haben
Y Wasserstoff; Cyan; Chlor; Brom; Methylsulfon; Ethylsulfon; Phenylsulfon; Carbalkoxy oder -SO₃H,
Y₁ Wasserstoff; Chlor; Brom oder -SO₃H
Y₂ Wasserstoff; Chlor; Brom; Methyl; Carbalkoxy; 2-Benzthiazolyl oder -SO₃H bedeuten,
und wobei die Substituenten B, R₁ bis R₄ und Y bis Y₂ Sulfonsäuregruppen enthalten,
und aus mindestens einer rotfärbenden Verbindung der Formel (III) 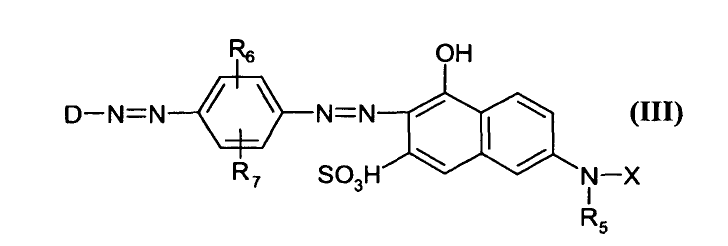 worin
D für 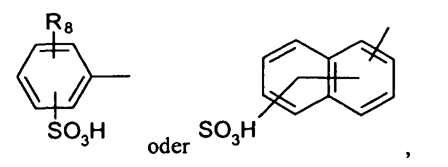
R₅ für Wasserstoff; C₁₋₄Alkyl oder C₂₋₄-Hydroxyalkyl,
R₆ für Wasserstoff; C₁₋₄Alkyl; C₁₋₄Alkoxy; -NHCOC₁₋₄Alkyl; -NHCOOC₁₋₄Alkyl oder -NHCONH₂,
R₇ für Wasserstoff; Halogen; C₁₋₄Alkyl oder C₁₋₄Alkoxy und
R₈ für Wasserstoff; C₁₋₄Alkyl; C₁₋₄Alkoxy oder Halogen stehen;
X für 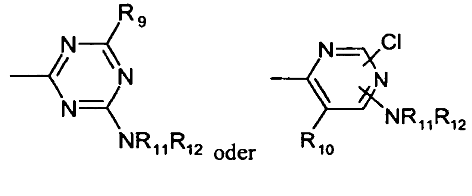 steht,
worin
R₉ für Chlor; Hydroxy oder NHCN,
R₁₀ für Wasserstoff; Chlor oder Cyano,
R₁₁ für Wasserstoff; C₁₋₁₂Alkyl; durch eine oder zwei Hydroxygruppen substituiertes C₂₋₈Alkyl, Phenyl, Phenyl(C₁₋₄alkyl) oder Cyclohexyl und
R₁₂ für unsubstituiertes oder durch Halogen, eine oder zwei Hydroxygruppen, Phenyl, Carboxy oder C₁₋₁₂Alkoxy substituiertes C₄₋₂₀Alkyl; -G-O-C₁₋₁₂Alkyl, worin G C₂₋₃Alkylen bedeutet; Phenyl oder Phenyl(C₁₋₃Alkyl), deren Phenylring unsubstituiert oder substituiert ist durch einen bis drei Substituenten aus der Reihe Halogen, C₁₋₁₆Alkyl, C₂₋₆Hydroxyalkyl, C₁₋₆Alkoxy, Phenoxy und -NHCOCH₃; oder für Cyclohexyl, das unsubstituiert oder durch eine bis drei C₁₋₄Alkylgruppen substituiert ist, stehen,
mit der Massgabe, dass die Gesamtzahl der in den Resten R₁₁ und R₁₂ enthaltenen Kohlenstoffatomen zusammen mindestens 8 beträgt, oder
-NR₁₁R₁₂ den Rest 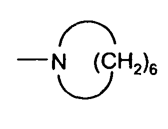 bildet,
und/oder aus mindestens einer rotfärbenden Verbindung der Formel (IV) 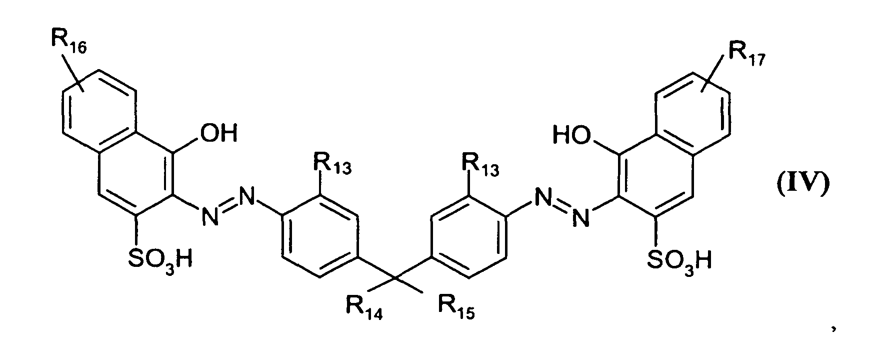 worin
jedes R₁₃ unabhängig Wasserstoff, C₁₋₄Alkyl, Halogen,
R₁₄ Wasserstoff oder gegebenenfalls substituiertes C₁₋₄alkyl bedeutet,
R₁₅ unabhängig von R₁₄ dieselben Bedeutungen hat oder
R₁₄ und R₁₅ zusammen einen cycloaliphatischen Ring mit 5-8 Kohlenstoffatome bilden,
R₁₆ Wasserstoff oder Hydroxy bedeutet und
R₁₇ unabhängig von R₁₆ dieselbe Bedeutung hat,
und/oder mindestens eine rotfärbende Verbindung der Formel (V) 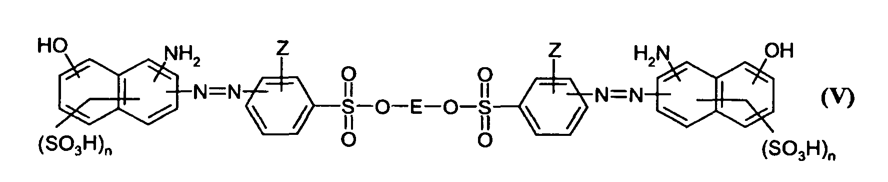 worin
E für einen aromatischen, araliphatischen, hydroaromatischen Rest oder zwei aromatische Reste,
Z für Wasserstoff oder einen beliebigen Substituenten mit Ausnahme von Sulfonsäure und Carbonsäuregruppen,
n für 1 oder 2 stehen,
und mindestens ein anionisches und/oder nichtionisches Färbehilfsmittel verwendet werden.

2. Trichromiefärbeverfahren nach Anspruch 1, **dadurch gekennzeichnet, dass** eine Farbstoffmischung bestehend aus mindestens einer blaufärbenden Verbindung gemäss Formel (I), worin A ein Wasserstoffatom oder einen beliebig substituierten Alkyl- oder Arylrest darstellt, und aus mindestens einer gelbfärbenden Verbindung gemäss Formel (II), worin
B Wasserstoff; Alkyl; durch Hydroxy, Alkoxy, Alkanoyloxy oder Phenoxy substituiertes Alkyl,
R₄ Wasserstoff oder Alkyl mit 1-8 C-Atomen, das durch Sauerstoffatome unterbrochen und durch Hydroxy, Acyloxy, Alkoxy, Cyan, Cycloalkoxy, Aralkoxy oder Aroxy substituiert sein kann,
R₂ Wasserstoff; Alkyl mit 1-8 C-Atomen, das durch Sauerstoffatome unterbrochen und Aralkylreste mit 7 bis 15 C-Atomen sein kann und
Y Wasserstoff; Chlor; Brom oder -SO₃H,
Y₂ Wasserstoff; Chlor; Brom; Methyl oder -SO₃H bedeuten,
und aus mindestens einer rotfärbenden Verbindung gemäss Formel (III) worin
D für 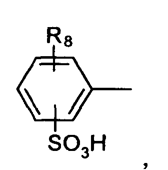
R₅ für Wasserstoff oder Methyl,
R₆ für Wasserstoff; Methyl; C₁₋₄Alkoxy; -NHCOCH₃ oder -NHCONH₂,
R₇ für Wasserstoff; Methyl und
R₈ für Wasserstoff; Methyl; Methoxy stehen und
X für 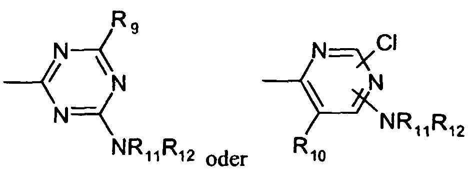 steht,
worin
R₉ für Chlor; Hydroxy oder NHCN,
R₁₀ für Wasserstoff; Chlor oder Cyano,
R₁₁ für Wasserstoff; C₁₋₄Alkyl; durch eine oder zwei Hydroxygruppen substituiertes C₂₋₄Alkyl; oder Phenyl und
R₁₂ für unsubstituiertes oder durch Phenyl monosubstituiertes C₄₋₁₄Alkyl; -G1-O-C₆₋₁₂Alkyl, worin G1 für lineares C₂₋₃Alkylen steht; durch C₆₋₁₆Alkyl oder Phenoxy monosubstituiertes Phenyl; Phenyl(C₁₋₂Alkyl), dessen Phenylring unsubstituiert oder durch C₆₋₁₄Alkyl monosubstituiert ist; oder durch eine bis drei Methylgruppen substituiertes Cyclohexyl stehen,
und/oder aus einer rotfärbenden Verbindung der Formel (IVb) 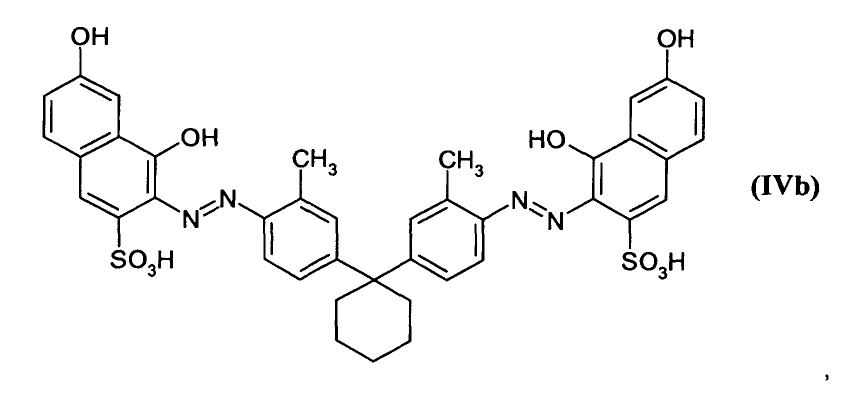 und/oder aus mindestens einer rotfärbenden Verbindung der Formel (Va) 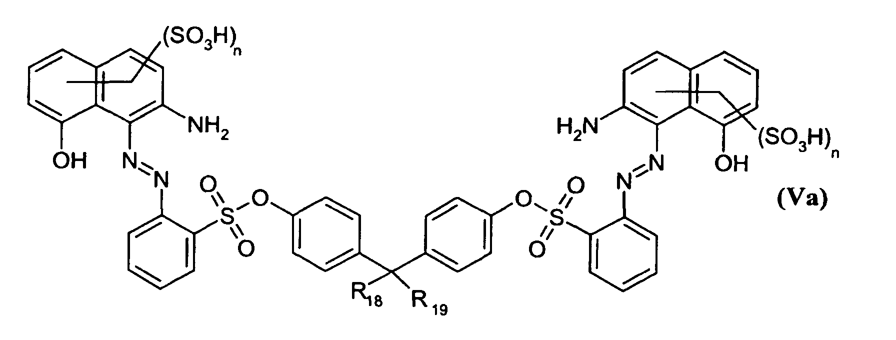 worin
R₁₈ Wasserstoff oder gegebenenfalls substituiertes C₁₋₄alkyl bedeutet,
R₁₉ unabhängig von R₁₈ dieselben Bedeutungen hat,
n für 1 oder 2 steht,
und mindestens ein anionisches und/oder nichtionisches Färbehilfsmittel verwendet werden.

3. Trichromiefärbeverfahren gemäss Anspruch 1 oder 2, **dadurch gekennzeichnet, dass** eine Farbstoffmischung bestehend aus mindestens einer blaufärbenden Verbindung gemäss Formel (I), worin A ein Wasserstoffatom darstellt und R einen beliebig substituierten Arylrest darstellt, und aus mindestens einer gelbfärbenden Verbindung gemäss Formel (II), worin
B Wasserstoff oder Methyl,
R₄ Wasserstoff oder Alkyl mit 1-4 C-Atomen,
R₁ Wasserstoff oder Alkyl mit 1-4 C-Atomen,
R₂ Wasserstoff; Alkyl mit 1-4 C-Atomen oder Aralkylreste mit 7 bis 15 C-Atomen,
R₃ Wasserstoff oder Methyl,
Y Wasserstoff oder Chlor,
Y₁ Wasserstoff oder Chlor,
Y₂ Wasserstoff oder -SO₃H bedeuten,
und aus mindestens einer rotfärbenden Verbindung gemäss Formel (III), worin
D für 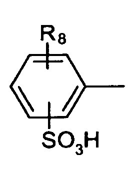 steht,
R₅ für Wasserstoff oder Methyl,
R₆ für Wasserstoff oder Methyl,
R₈ für Wasserstoff oder Methyl stehen und
X für 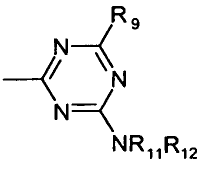 steht,
worin
R₉ für Chlor oder Hydroxy,
R₁₁ für Wasserstoff oder Methyl und
R₁₂ für unsubstituiertes oder durch Phenyl monosubstituiertes C₄₋₁₄Alkyl stehen,
und aus einer rotfärbenden Verbindung der Formel (IVb) 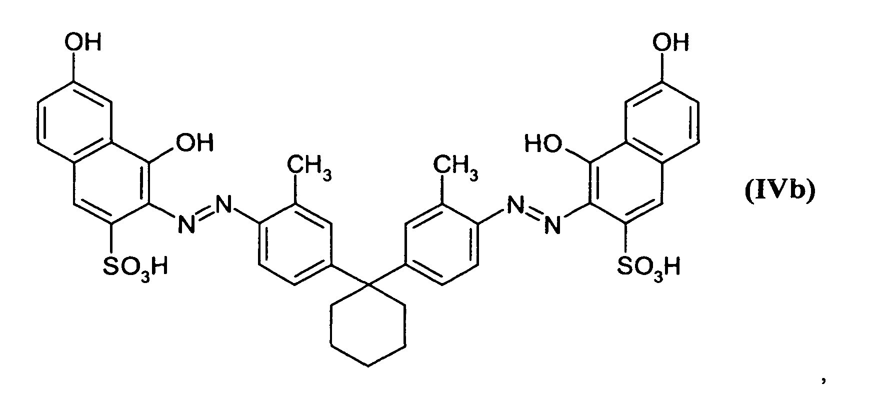 und aus mindestens einer rotfärbenden Verbindung der Formel (Vb) 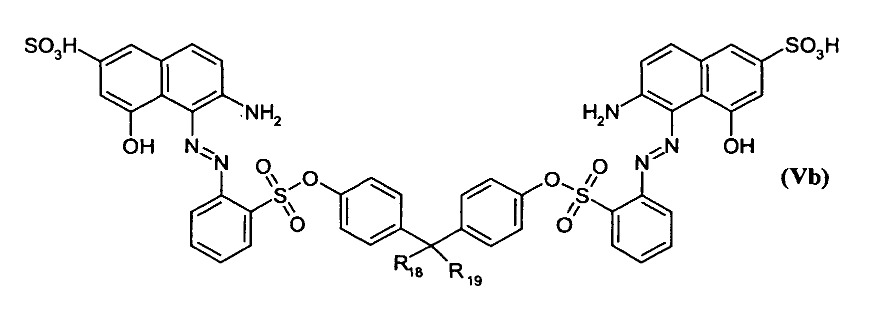 worin
R₁₈ Wasserstoff oder Methyl bedeutet,
R₁₉ unabhängig von R₁₈ dieselben Bedeutungen hat
und mindestens ein anionisches und/oder nichtionisches Färbehilfsmittel verwendet werden.

4. Trichromiefärbeverfahren nach Anpruch 1 oder 2, **dadurch gekennzeichnet, dass** eine Farbstoffmischung bestehend aus mindestens einer Blaukomponente gemäss Anspruch 1 oder 2 und aus mindestens einer Gelbkomponente aus Anspruch 1 oder 2 und aus einer Rotkomponente, welche eine Mischung mindestens einer Verbindung der Formel (III) und mindestens einer Verbindung der Formel (IV) darstellt, und mindestens ein anionisches und/oder nichtionisches Färbehilfsmittel verwendet werden.

5. Trichromiefärbeverfahren nach Anpruch 1 oder 2, **dadurch gekennzeichnet, dass** eine Farbstoffmischung bestehend aus mindestens einer Blaukomponente gemäss Anspruch 1 oder 2 und aus mindestens einer Gelbkomponente aus Anspruch 1 oder 2 und aus einer Rotkomponente, welche eine Mischung mindestens einer Verbindung der Formel (III) und mindestens einer Verbindung der Formel (V) darstellt, und mindestens ein anionisches und/oder nichtionisches Färbehilfsmittel verwendet werden.

6. Trichromiefärbeverfahren nach Anpruch 1 oder 2, **dadurch gekennzeichnet, dass** eine Farbstoffmischung bestehend aus mindestens einer Blaukomponente gemäss Anspruch 1 oder 2 und aus mindestens einer Gelbkomponente aus Anspruch 1 oder 2 und aus einer Rotkomponente, welche eine Mischung mindestens einer Verbindung der Formel (IV) und mindestens einer Verbindung der Formel (V) darstellt, und mindestens ein anionisches und/oder nichtionisches Färbehilfsmittel verwendet werden.

7. Farbstoffmischungen, welche in den Verfahren der Ansprüche 1 - 6 verwendet werden.

8. Substrate aus natürlichem oder synthetischem Polyamid oder Substrate, welche polyamidhaltig sind, die mittels einem Trichromiefärbeverfahren gemäss einem der Ansprüche 1 - 6 gefärbt oder bedruckt wurden.

## Revendications

1. Procédé de teinture trichromatique pour la teinture ou l'impression de fibres de polyamide naturelles ou synthétiques ou de telles fibres contenant du polyamide, **caractérisé en ce qu'**il comprend l'utilisation d'un mélange de colorants constitué d'au moins un composé de teinture bleue de formule (I) 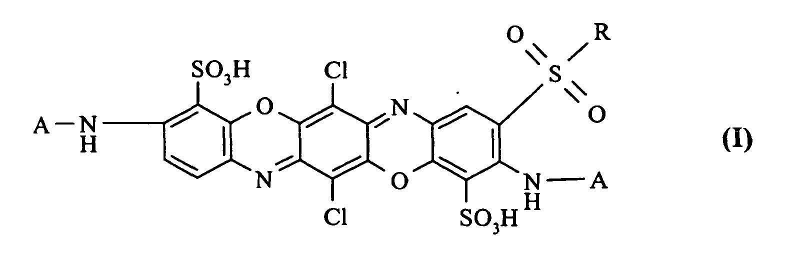 dans laquelle
A est un atome d'hydrogène ou un substituant éventuel et
R est un radical alkyle, cycloalkyle ou aryle éventuellement substitué,
et d'au moins un composé de teinture jaune de formule (II) 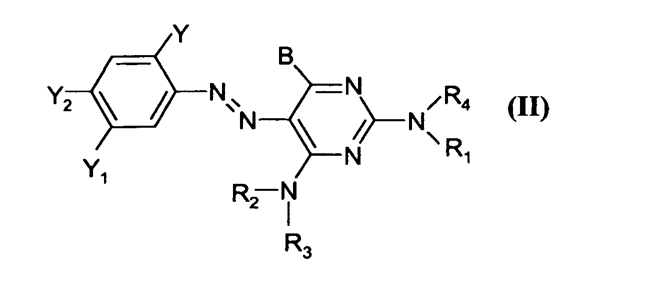 dans laquelle
B est un hydrogène; un alkyle; un alkyle, aralkyle, cycloalkyle, hydroxy-, alcoxy-, alcanoyloxy- ou phénoxy- substitué ou un phényle non substitué ou alkyl-, halogéno-, alcoxy-, nitro-, cyano-, alcoxycarbonyl-, carbamoyl- ou sulfamoyl-, substitué,
R₄ est un hydrogène; un alkyle ayant de 1 à 8 atomes de carbone, qui peut être interrompu par des atomes d'oxygène et peut être substitué par un hydroxy, un acyloxy, un alcoxy, un cyano, un cycloalcoxy, un aralcoxy ou un aroxy; des radicaux cycloalkyle ou polycycloalkyle ayant de 5 à 15 atomes de carbone, non substitués ou hydroxy-, chloro-, hydroxyalkyl-, chloroalkyl-, ou alkyl- substitués, des radicaux aralkyle ayant de 7 à 15 atomes de carbone ou des radicaux phényle non substitués ou chloro-, hydroxy-, alcoxy-, alkyl-, hydroxyalkyl-, ou hydroxyalcoxy- substitués ainsi que des radicaux alcényle, pyrrolidonylalkyle et carbonylalkyle,
R₁ est un hydrogène; un alkyle ayant de 1 à 8 atomes de carbone ou un hydroxyalkyle ayant de 2 à 9 atomes de carbone, et
R₄ et R₁ se combinent à l'azote pour former le radical d'une pyrrolidine, d'une pipéridine ou d'une morpholine et indépendamment
R₂ présente les mêmes significations que R₄,
R₃ présente les mêmes significations que R₁ et
R₂ et R₃ présentent conjointement les mêmes significations que R₄ et R₁ conjointement,
Y est un hydrogène; un cyano; un chloro; un bromo; une méthylsulfone; une éthylsulfone; une phénylsulfone; un carbalcoxy ou -SO₃H,
Y₁ est un hydrogène; un chloro; un bromo ou -SO₃H,
Y₂ est un hydrogène; un chloro; un bromo; un méthyle; un carbalcoxy; un 2-benzothiazolyle ou -SO₃H,
et dans laquelle B, R₁ à R₄ et Y à Y₂ renferment des groupes acide sulfonique,
et d'au moins un composé de teinture rouge de formule (III) 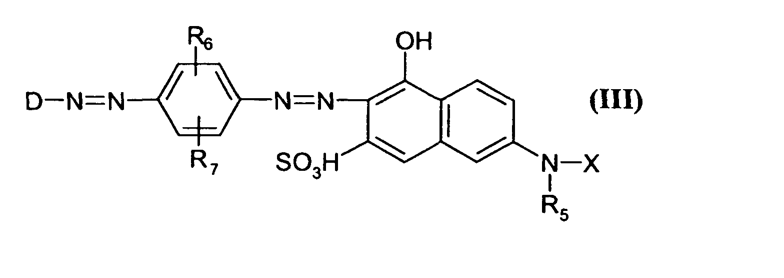 dans laquelle
D est 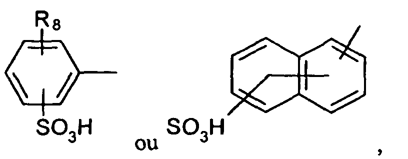
R₅ est un hydrogène; un alkyle en C₁₋₄ ou un hydroxyalkyle en C₂₋₄,
R₆ est un hydrogène; un alkyle en C_{1-4;} un alcoxy en C₁₋₄; un -NHCOC₁₋₄-alkyle; un -NHCOOC₁₋₄-alkyle ou -NHCONH₂
R₇ est un hydrogène; un halogène; un alkyle en C₁₋₄ ou un alcoxy en C₁₋₄ et
R₈ est un hydrogène; un alkyle en C_{1-4;} un alcoxy en C₁₋₄ ou un halogène;
X est 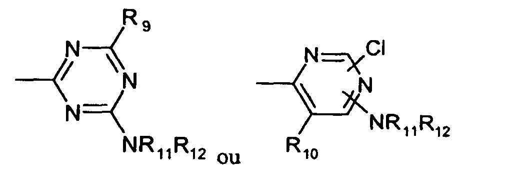
dans lesquels
R₉ est un chloro; un hydroxy ou NHCN,
R₁₀ est un hydrogène, un chloro ou un cyano,
R₁₁ est un hydrogène; un alkyle en C_{1-12;} un alkyle en C₂₋₈ hydroxy-monosubstitué ou -disubstitué, un phényle, un phényl(C₁₋₄alkyle) ou un cyclohexyle et
R₁₂ est un alkyle en C₄₋₂₀ non substitué ou halogéno-substitué, hydroxy-monosubstitué ou -disubstitué, phényl-substitué, carboxy-substitué ou C₁₋₁₂-alcoxy-substitué; -G-O-C₁₋₁₂-alkyle, dans lequel G est un alkylène en C_{2-3;} un phényle ou un phényl (C₁₋₃-alkyle), dont le noyau phényle est non substitué ou substitué par de un à trois substituants choisis parmi le groupe constitué d'un halogène, d'un alkyle en C₁₋₁₆, d'un hydroxyalkyle en C₂₋₆, d'un alcoxy en C₁₋₆, d'un phénoxy et de -NHCOCH₃; ou est un cyclohexyle qui est non substitué ou substitué par de un à trois groupes alkyle en C₁₋₄,
à condition que le nombre total d'atomes de carbone dans R₁₁ et R₁₂ conjointement soit d'au moins 8, ou
-NR₁₁R₁₂ est 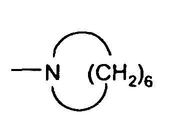 et/ou d'au moins un composé de teinture rouge de formule (IV) 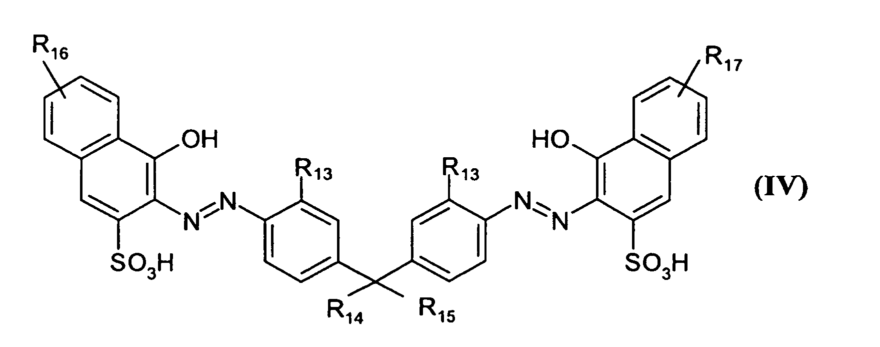 dans laquelle
chaque R₁₃ est indépendamment un hydrogène, un alkyle en C₁₋₄, un halogéne,
R₁₄ est un hydrogène ou un alkyle en C₁₋₄ substitué ou non substitué,
R₁₅ présente indépendamment les mêmes significations que R₁₄, ou
R₁₄ et R₁₅ se combinent pour former un noyau cycloaliphatique ayant de 5 à 8 atomes de carbone,
R₁₆ est un hydrogène ou un hydroxy et
R₁₇ présente indépendamment les mêmes significations que R₁₆,
et/ou d'au moins un composé de teinture rouge de formule (V) 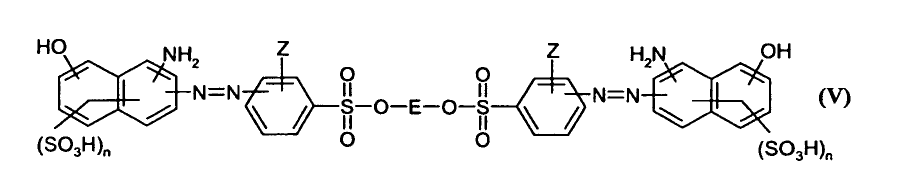 dans laquelle
E représente un radical aromatique, araliphatique, hydroaromatique ou deux radicaux aromatiques,
Z représente un hydrogène ou un substituant éventuel excepté des groupes acide sulfonique et acide carboxylique,
n vaut 1 ou 2,
et d'au moins un auxiliaire de teinture anionique et/ou non ionique.

2. Procédé de teinture trichromatique selon la revendication 1, **caractérisé en ce qu'**il comprend l'utilisation d'un mélange de colorants constitué d'au moins un composé de teinture bleue de formule (I) dans laquelle A est un atome d'hydrogène ou un radical alkyle ou aryle éventuellement substitué, et d'au moins un composé de teinture jaune de formule (II) dans laquelle
B est un hydrogène; un alkyle; un alkyle hydroxy-, alcoxy-, alcanoyloxy- ou phénoxy- substitué,
R₄ est un hydrogène ou un alkyle ayant de 1 à 8 atomes de carbone, qui peut être interrompu par des atomes d'oxygène et peut être substitué par un hydroxy, un acyloxy, un alcoxy, un cyano, un cycloalcoxy, un aralcoxy ou un aroxy,
R₂ est un hydrogène; un alkyle ayant de 1 à 8 atomes de carbone, qui peut être interrompu par des atomes d'oxygène et peut être des radicaux aryle ayant de 7 à 15 atomes de carbone et
Y est un hydrogène; un chloro; un bromo ou -SO₃H,
Y₂ est un hydrogène; un chloro; un bromo; un méthyle ou -SO₃H,
et d'au moins un composé de teinture rouge de formule (III) dans laquelle
D est 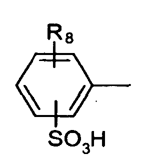
R₅ est un hydrogène ou un méthyle,
R₆ est un hydrogène, un méthyle; un alcoxy en C_{1-4;} -NHCOCH₃ ou -NHCONH₂,
R₇ est un hydrogène; un méthyle et
R₈ est un hydrogène; un méthyle; un méthoxy et
X est 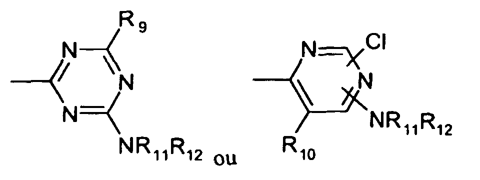
dans lesquels
R₉ est un chloro, un hydroxy ou NHCN,
R₁₀ est un hydrogène, un chloro ou un cyano,
R₁₁ est un hydrogène; un alkyle en C_{1-4;} un alkyle en C₂₋₄ hydroxy-monosubstitué ou -disubstitué; ou un phényle et
R₁₂ est un alkyle en C₄₋₁₄ non substitué ou phényl-monosubstitué; un -G1-O-C₆₋₁₂-alkyle, dans lequel G1 est un alkylène en C₂₋₃ linéaire; un phényle C₆₋₁₆-alkyl- ou phénoxy-monosubstitué; un phényl(C₁₋₂-alkyle) dont le noyau phényle est non substitué ou monosubstitué par un alkyle en C₆₋₁₄; ou un cyclohexyle substitué par de un à trois groupes méthyle,
et/ou d'un composé de teinture rouge de formule (IVb) 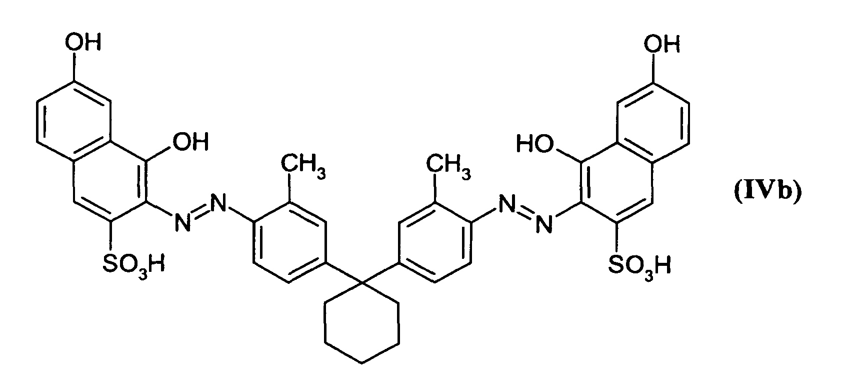 et/ou d'un composé de teinture rouge de formule (Va) 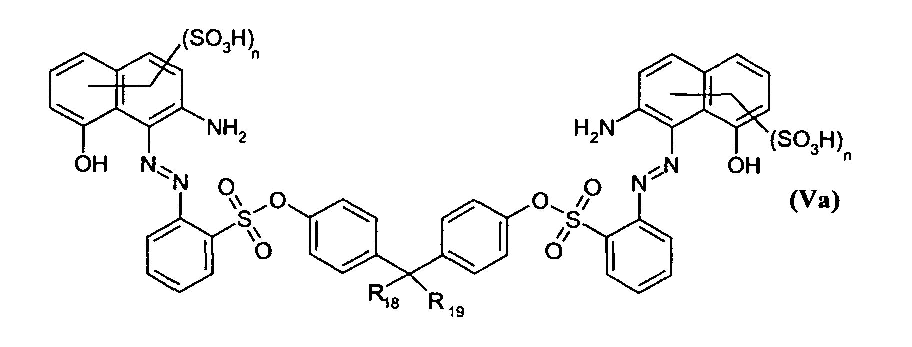 dans laquelle
R₁₈ est hydrogène ou un alkyle en C₁₋₄ substitué ou non substitué,
R₁₉ présente indépendamment les mêmes significations que R₁₈,
n vaut 1 ou 2,
et d'au moins un auxiliaire de teinture anionique et/ou non ionique.

3. Procédé de teinture trichromatique selon la revendication 1 ou 2, **caractérisé en ce qu'**il comprend l'utilisation d'un mélange de colorants constitué d'au moins un composé de teinture bleue de formule (I) dans laquelle A est un atome d'hydrogène et R est un radical aryle éventuellement substitué, et d'au moins un colorant de teinture jaune de formule (II) dans laquelle
B est un hydrogène ou un méthyle,
R₄ est un hydrogène ou un alkyle ayant de 1 à 4 atomes de carbone,
R₁ est un hydrogène ou un alkyle ayant de 1 à 4 atomes de carbone,
R₂ est un hydrogène; un alkyle ayant de 1 à 4 atomes de carbone ou des radicaux aralkyle ayant de 7 à 15 atomes de carbone,
R₃ est un hydrogène ou un méthyle,
Y est un hydrogène ou un chloro,
Y₁ est un hydrogène ou un chloro,
Y₂ est un hydrogène ou -SO₃H,
et d'au moins un composé de teinture rouge de formule (III) dans laquelle
D est 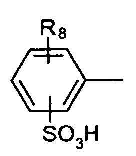
R₅ est un hydrogène ou un méthyle,
R₆ est un hydrogène ou un méthyle,
R₈ est un hydrogène ou un méthyle et
X est 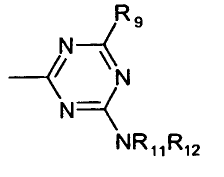
dans lequel
R₉ est un chloro ou un hydroxy,
R₁₁ est un hydrogène ou un méthyle et
R₁₂ est un alkyle en C₄₋₁₄ non substitué ou phényl-monosubstitué,
et d'au moins un composé de teinture rouge de formule (IVb) 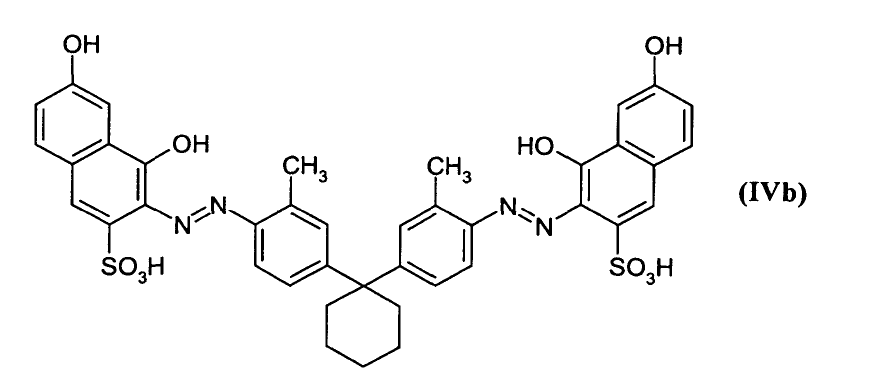 et d'au moins un composé de teinture rouge de formule (Vb) 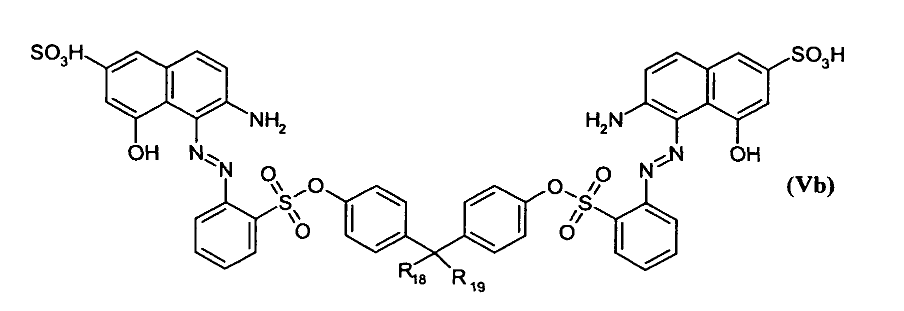 dans laquelle
R₁₈ est un hydrogène ou un méthyle,
R₁₉ présente indépendamment les mêmes significations que R₁₈,
et d'au moins un auxiliaire de teinture anionique et/ou non ionique.

4. Procédé de teinture trichromatique selon la revendication 1 ou 2, **caractérisé en ce qu'**il comprend l'utilisation d'un mélange de colorants constitué d'au moins un composant bleu selon la revendication 1 ou 2, et d'au moins un composant jaune selon la revendication 1 ou 2 et d'un composant rouge qui constitue un mélange d'au moins un composé de formule (III) et d'au moins un composé de formule (IV), et d'au moins un auxiliaire de teinture anionique et/ou non ionique.

5. Procédé de teinture trichromatique selon la revendication 1 ou 2, **caractérisé en ce qu'**il comprend l'utilisation d'un mélange de colorants constitué d'au moins un composant bleu selon la revendication 1 ou 2, et d'au moins un composant jaune selon la revendication 1 ou 2 et d'un composant rouge qui constitue un mélange d'au moins un composé de formule (III) et d'au moins un composé de formule (V), et d'au moins un auxiliaire de teinture anionique et/ou non ionique.

6. Procédé de teinture trichromatique selon la revendication 1 ou 2, **caractérisé en ce qu'**il comprend l'utilisation d'un mélange de colorants constitué d'au moins un composant bleu selon la revendication 1 ou 2, et d'au moins un composant jaune selon la revendication 1 ou 2 et d'un composant rouge qui constitue un mélange d'au moins un composé de formule (IV) et d'au moins un composé de formule (V), et d'au moins un auxiliaire de teinture anionique et/ou non ionique.

7. Mélanges de colorants utilisés dans les procédés des revendications 1 à 6.

8. Substrats constitués de substrats de polyamide naturels ou synthétiques ou polyamidiques teints ou imprimés par un procédé de teinture trichromatique selon l'une quelconque des revendications 1 à 6.
